# EUROPEAN PATENT SPECIFICATION

(11) **EP 0 807 474 B1**
(45) Date of publication and mention of the grant of the patent: **07.11.2001**
(21) Application number: 96901522.1
(22) Date of filing: 31.01.1996
(51) Int. Cl.: B09B 3/00, A62D 3/00, C08J 11/20

(54) **METHOD AND EQUIPMENT FOR THE DISPOSAL OF MATERIALS SUCH AS WASTE**
VERFAHREN UND ANLAGE ZUR ENTSORGUNG VON MATERIALEN, Z.B. ABFÄLLEN
PROCEDE ET EQUIPEMENT POUR TRAITER DES MATERIAUX TELS QUE DES DECHETS

(30) Priority: 02.02.1995 JP 1615795; 13.02.1995 JP 2436095; 19.05.1995 JP 12193395; 14.06.1995 JP 14779195; 13.07.1995 JP 17781895
(43) Date of publication of application: 19.11.1997
(73) Proprietor: EIWA CO LTD, Kurita-gun, Shiga 520-30 (JP)
(72) Inventor: HASHIMOTO, Yotaro, Ritto-cho Kurita-gun Shiga 520-30 (JP)
(74) Representative: Henkel, Feiler, Hänzel
(86) International application number: JP9600214
(87) International publication number: WO9623607

(56) References cited:
- EP-A- 0 290 098
- EP-A- 0 564 844
- DE-A- 4 223 663
- JP-A- 2 001 748
- JP-A- 52 088 579
- JP-B- 49 042 786
- US-A- 3 535 354
- US-A- 4 106 209

## Description

### Field of the Invention

The present invention relates to:
a method for forcedly oxidizing material under fumigating condition, wherein the material is exposed to the vapor of special mixture;
a method for the disposal of a waste synthetic resin film such as polyvinyl chloride, which is extensively used for housing culture, malting culture and the like by farmers, through mixture solution of methylene chloride and water as strong oxidative mixture liquid in a treatment equipment;
a method for removal of harmful chlorine from a polyvinyl chloride film as the waste synthetic resin film mentioned above;
a method for dissolving and decomposing enormous synthetic resin from collected trash bags including domestic garbage or waste films of synthetic resin before incineration;
a method for opening the blocked cell walls of garbage or vegetation and dissolving water and fat thereof, thereby easing extraction of vegetable essence thereof, or easing a process for reducing water of garbage;
a method for decomposing polychlorinated biphenyl (PCB), and
a method for removal of fat from animal bones or fish body, which is used in a process of producing phosphatic manure of powdered bones comprising a step of removal of fat from bones of catle or pigs, or a process of producing of feed of powdered bones comprising a step of removal of fat from bodies of sardine or horse mackerel caught largely.

### Description of Related Art

Conventionally, a general method of oxidizing material is heating at a high temperature or soaking in alkaline or acid solution.

However, it is impossible to use a conventional method for oxidizing material which is spoiled by heating at high temperature or soaking in solution.

The present invention relates to a method of penetrating vapor or gas into such material, which cannot be heated at high temperature or soaked in solution, in a processing tank of a low temperature about 50 - 150°C.

Also, waste synthetic resin film used to be dumped as general garbage and incinerated in a garbage furnace.

However, the synthetic resin film amounts large quantities, and is of industrial waste, different from general trash or garbage in quality. A large mount of heat is generated when the synthetic resin film is incinerated. Chlorine gas is generated when polyvinyl chloride is burned up. The disposal of synthetic resin film costs too much as a public enterprise because of its acceleration of damage of a trash burner and its smoke pollution.

Therefore, some public bodies come to require a person who dumps a waste synthetic resin film to pay the expense of disposal thereof.

"PCB" is a general term for polychlorinated biphenyl, which is a mixture of chlorinated biphenyl having two, three, four, five or six chlorines. The PCB is easy to deal with because it is chemically, physically stable and it is liquid at the normal temperature. Although PCB is not used currently because of its harmful, it used to be used largely as an insulator of a condenser or a transformer or as an ingredient of a pressure sensing paper or so on.

However, there still remains the problem about disposal of goods containing PCB. Detection of PCB from the ground, drainage or sludge constitutes a public problem.

It is greatly hard to resolve and make PCB harmless because the PCB is stable.

Under these circumstances, the study for resolving and making PCB harmless is carried on. For example, exposing PCB to ultraviolet rays and culturing microorganisms in the ground containing PCB are known as methods of resolving PCB.

Such technologies are disclosed in Japanese Patent Provisional Publication No.61-68281 or Japanese Patent Provisional Publication No.4-370097, for example.

Also, as another method of resolution and disposal of PCB is known a technique to make PCB harmless by putting insulating oil containing PCB into a heating furnace, heating PCB at a temperature less than 110 °C so as to evaporate and separate PCB, and burning the PCB gas and the combustion gas of PCB so as to resolve in another furnace which keeps a high temperature 1200 through 1500°C.

The technique is shown in the Japanese Patent Provisional Publication No.2-232073.

Also, conventionally, a method of processing a pigbone or cowbone removed their meat for removal fat is boiling the bones well. The bones are ground into powder after the process and are used as powdered bone. It is preferred to burn up the bone without processing for removal fat rather than to boil them because boiling for removal of fat takes much time and boiling bones largely at a time is impossible.

Furthermore, as for fish, a method of removal only fats is not discovered. Whereby, fish is dried in a drying kiln without process for removal fats, so that fish meal is made with fats on.

Therefore, in the case of making fish meal, it is hard to process fish because of the strong viscosity. It is incapable of lowering th e percentage of moisture content because of the fats so that there is a problem that it is perishable. Also, fish meal is made without removal fish fat and is fed a cow or a pig so that there is a problem that their meats smell of fish.

The present invention relates to a technique for producing high-grade fish meal which scarcely smell of fish.

DE-A-42 23 663 discloses a process for thermally recycling used polyvinyl chloride to recover heat and anhydrous hydrogen chloride by burning the polyvinyl chloride in the presence of oxygen by adding gaseous chlorine and/or gaseous chlorohydrocarbons in order to control the total atom ratio of hydrogen to chlorine to be in a range of at least 1:1.

EP-A- 0 564 844 discloses a wood-treating method which comprises heating a chlorine base organic solvent so as to produce chlorine base organic solvent vapor, and allowing the vapor to permeate into the wood for cleaning by vapor-defatting in order to melt the oil and fat contents of wood and perforating the wood cell membranes.

US-A-3 353 354 discloses a solvent extraction and dehydration system for animal and vegetable tissues containing water and fats (oils and oil-soluble substances) by treatment of such comminuted solid tissue with a suitable solvent immiscible with and capable of forming a heterogeneous azeotrope with the water in said tissue and a miscella with the fat and the separate removal of the azeotrope and miscella with the employment of solvent in vapor form as a heating medium.

### Disclosure of the Invention

The present invention relates to a Method for the disposal of materials which is characterized in that a mixture solution of halogenated solvent solution, whose specific gravity is not less than 1 and boiling point is not more than 100 °C, with water is disposed in an airtight treatment tank, said mixture solution separates into an upper water layer a lower halogenated solvent solution layer, materials are disposed above said upper water layer without soaking in said mixture solution, said mixture solution is heated, generated halogenated solvent vapor reaches said materials after passing through said water layer, and said treatment tank is filled with said halogenated solvent vapor and water vapor so as to treat said materials by said vapors.

Specifically the present invention relates to a method for oxidizing a material at a low temperature 50 through 100 °C by penetrating gas generated from the mixture of methylene chloride solution and water and filling the gas in a treatment tank instead of soaking in solution.

The present invention provides a method for melting, compressing and hardening a waste synthetic resin film into a solid state, which does not pollute the environment, at the lowest possible cost, when those who damps a trash as a waste synthetic resin film is required to burn it up or bury it and to bear the cost.

The present invention dissolves and compresses a waste synthetic resin film before incineration by using strong oxidation of chlorine ion (Cl ⁼ ) or methylene free radical (-CH2-) generated from the mixture vapor of methylene chloride vapor and water vapor, so as to transform it into a solid state or liquid state, which is used for fuel.

The present invention dissolves and compresses a waste synthetic resin film, which is used largely for a vinyl plastic hothouse cutivation or a malting film cultivation, so as to transform it into a small solid. Also, when the synthetic resin of the waste film is chloric synthetic resin such as polyvinyl chlorine, the present invention decomposes harmful chlorine therefrom, so that chlorine gas is not generated when the disposed waste film is incinerated.

A waste synthetic resin film shortens the expected life span of a furnace because it generates a high heat or a poisonous gas in a furnace when it is incinerated. Also, the perfect incineration takes much time, thereby the modulus of an equipment for incineration goes down.

The present invention eliminates faults of prior arts such as mentioned above.

The present invention relates to a method of disposal of waste effectively at a low cost by penetrating vapor generated from the mixture solution of methylene chloride solution, water and occasionally surfactant solution at a low temperature into a waste synthetic resin film so as to resolve, decompose and compress synthetic resin.

Large domestic garbage contains synthetic resin matter such as a trash bag itself, a pack for wrapping a daily dish, a dish for displaying, a polyethylene terephthalate bottle or so on. It is easy to separate metal material from garbage by a magnet or so on, however, it is difficult to separate synthetic resin from garbage.

The present invention relates to a method for dissolving and extracting synthetic resin in such a garbage by using strong oxidation of a chlorine ion generated from the mixture vapor of methylene chloride vapor and water vapor, so as to refine the extracted synthetic resin into fuel for incineration in a furnace.

Also, the present invention easily dissolves and extracts water and fat or oil components in garbage or vegetation by penetrating vapor of the mixture solution of methylene chloride solution, water and occasionally surfactant solution into garbage or vegetation and opening cell walls of vegetation.

A conventional method of disposal of PCB costs a lot and cannot make all PCB harmless completely. Also, a technique for disposal of PCB is not developed because the disposal thereof does not make a profit by itself.

The present invention provides a method of composing PCB, wherein all PCB are oxidized in a treatment tank of a low temperature at a time by strong oxidation of chlorine ion (Cl ⁻ ) instead of a partial disposal such as exposing to ultraviolet. This method reduces a loss of chlorine hydrocarbon solution and enables chlorine hydrocarbon solution to be redused, so that PCB can be decomposed at a low cost in public facilities.

Conventionally, a method of extracting fat from fish or bones of animals is not discovered, however, the present invention relates to a method of making a "super critical fluid" state, which is strongly oxidizable by exposing methylene chloride solution and water to vapor generated from the mixture of methylene chloride solution, water and occasionally surfactant solution at a low temperature and under a high pressure, so as to extract fat components from animal bones or fish easily.

### Brief Description of the Drawings

Fig. 1 is a diagram showing the fundamental construction of a equipment to be used in the method of the invention for the disposal of waste synthetic resin film according to the present invention;
Fig. 2 is a chart showing processes and steps in the method of disposal of waste synthetic resin film by means of indication as ON and OFF of a valve mechanism;
Fig. 3 is a side view of a treatment tank T, a lid 22, and a mounting table 26;
Fig. 4 is a side view showing a state in which waste synthetic resin film W is mounted on the table 26 and is enclosed into the treatment tank T;
Fig. 5 is a sectional front view of the same of Fig. 4;
Fig. 6 is a side view showing a state in which waste synthetic resin film W is taken out from the treatment tank T after process;
Fig. 7 is a sectional front view of the same of Fig. 6;
Fig. 8 is a graph showing reduction of chlorine when polyvinyl chloride is processed by a method for the disposal of material such as waste according to the present invention;
Fig. 9 is a sectional front view showing a state in which waste W containing synthetic resin matter m is mounting on the table 26 and processed;
Fig. 10 is a sectional front view showing a state in which PCB solution in a vessel is mounted on the table 26 and processed;
Fig. 11 is a sectional front view showing fish, bones of animals or so on are mounted on the table 26 and processed.

### The Best Way for the Embodiment of This Invention

Next, an embodiment will be explained.

In the present invention, methylene chloride solvent solution Me is used as halogenated solvent solution and a kind of chloric solution.

However, halogenated solvent solution or chloride solution is not limited only to methylene chloride solvent solution Me. It can be trichloroethylene, 111-trichloroethylene, tetrachloroethylene, or so on. Methylene chloride solvent solution Me is used as an embodiment of halogenated solvent solution or chloride solution.

Said methylene chloride is a substance expressed by a chemical formula as CH₂Cl₂ and has a molecular weight of 84.93. This substance is sometimes called dichloromethane or dichloromethylene in addition to the general name as methylene chloride. Its boiling point and melting point are 40.4 °C and -96.8°C, respectively.

Surfactants added into the mixture of methylene chloride solvent solution Me and water Wa are classified into anionic, cationic, noninonic, and amphoteric ones. Anionic surfactants are alkyl sodium sulfate, amide sodium sulfate, secondary alkyl sodium sulfate, alkyl sodium sulfonate, amide sodium sulfonate, alkyl naphtalene sodium sulfate and the like.

Cationic surfactants are amine acetate salt, alkyl trimethyl ammonium chloride, dialkyl methyl ammonium chloride, alkyl pyridium halogenide, alkyl dimethyl benzyl ammonium chloride and the like.

As amphoteric surfactants, there are carboxylic acid type, sulfonic acid type and sulfate type ones.

In nonionic surfactants, polyoxyethylene alkylphenol, polyoxyethylene fatty alcohol, polyoxyethylene fatty acid, polyoxyethylenic acid amide, polyoxyethylenic fatty amine, and polypropylene glycol are included.

In the present invention, with increase in alkalinity, Cl₂ is liable to be generated and, for prevention thereof, polyoxyethylene alkylphenol in alcoholic system, which is nonionic surfactant relatively stable against acid and alkali, is effective in this respect. Also, anionic or cationic surfactants are effective.

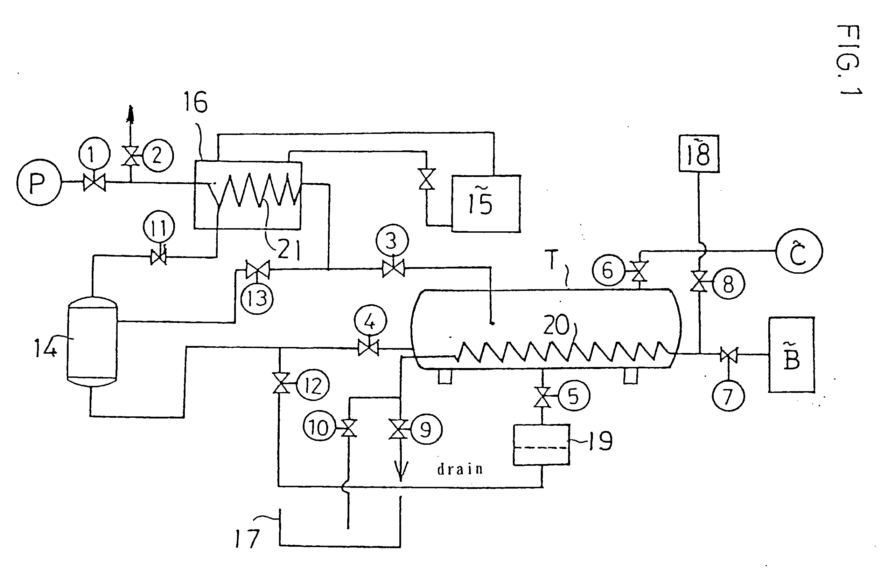

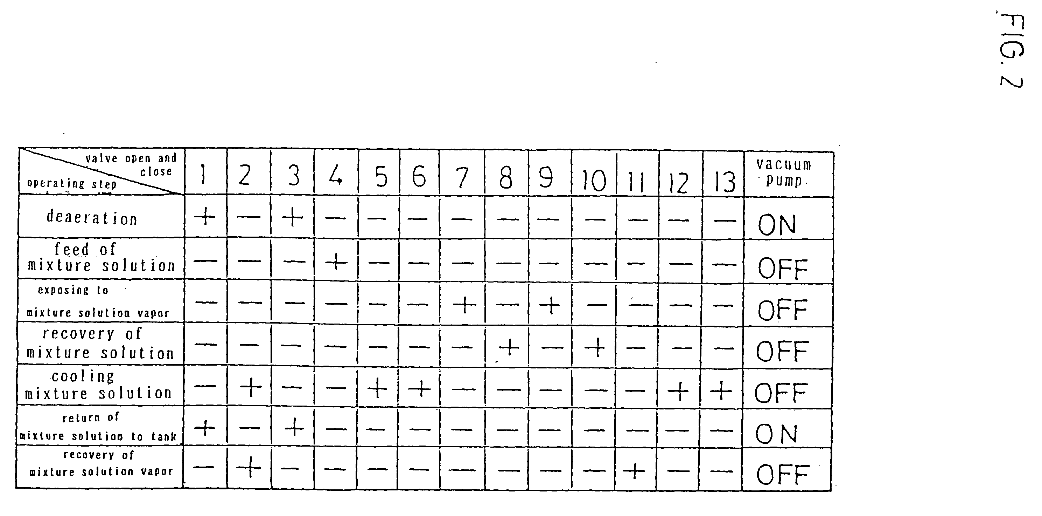

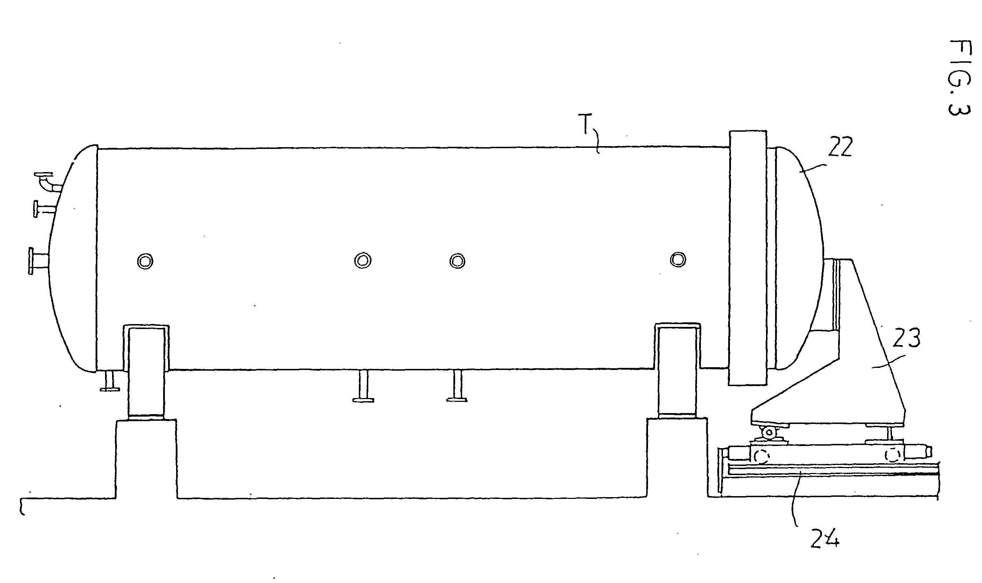

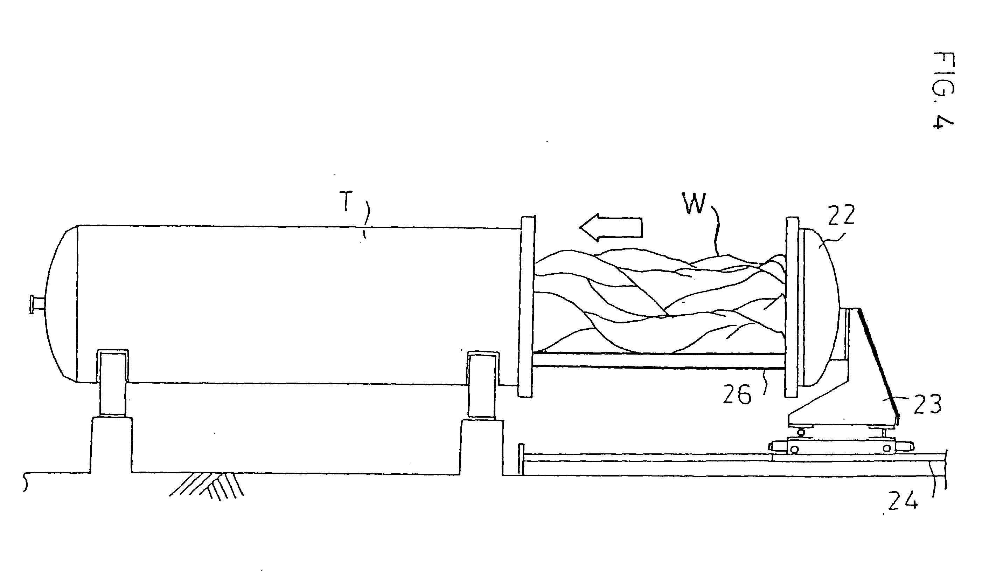

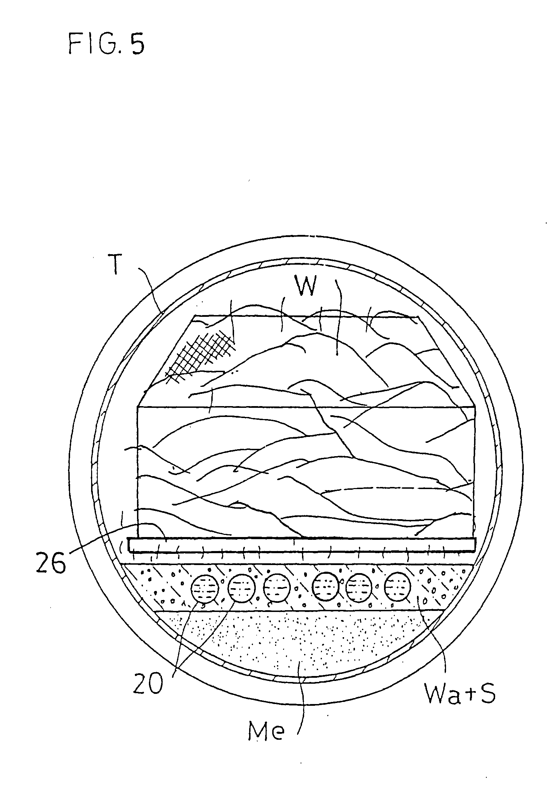

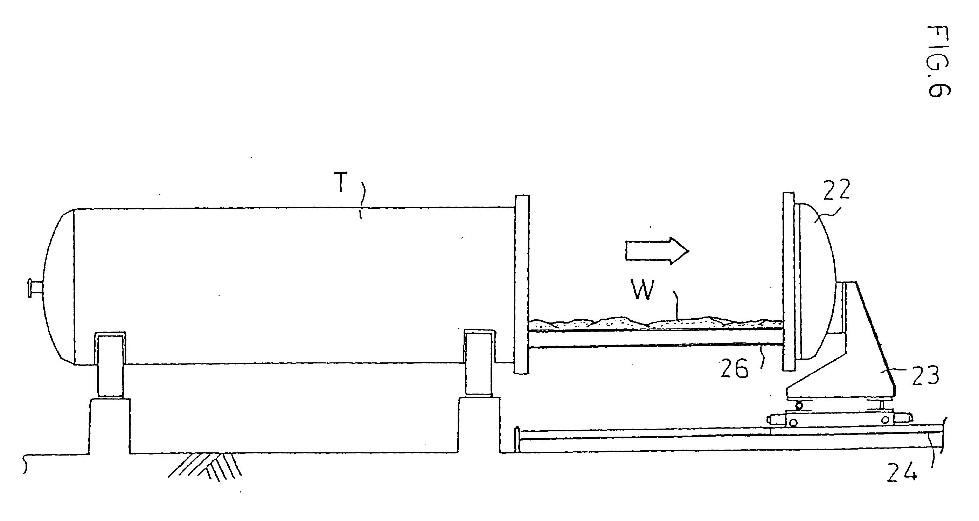

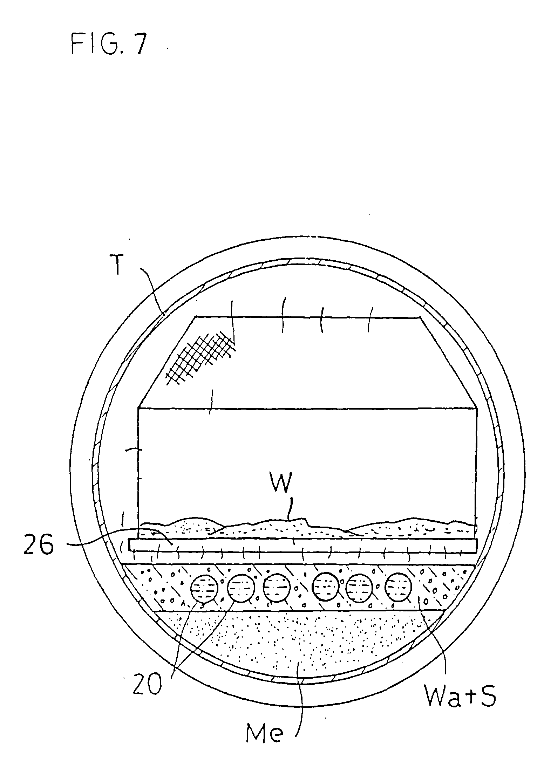

Fig. 1 is a diagram showing the fundamental, construction of an equipment to be used in the present invention for the disposal of material such as waste, Fig. 2 is a view showing each of and steps in the method of disposal of materials such as waste by means of indication as ON and OFF of a valve mechanism, Fig. 3 is a side view of a treatment tank T, lid 22, and a table 26, Fig. 4 is a side view of the same showing a state in which waste synthetic resin film W is mounted on the table 26 and enclosed in the tank T, Fig. 5 is a sectional front view of the same of Fig. 4, Fig. 6 is a side view showing a state in which waste synthetic resin film W is taken out from the tank T after processing, Fig. 7 is a sectional front view of the same of Fig. 6.

Referring to Figs. 3, 4, 5, 6 and 7, the structure including a treatment tank T, a lid 22, and a table 26 will be described. The treatment tank T is constructed to be a pressure vessel and, in view of such degrees of pressure as 50 Torr for deaeration and a vacuum of 200 Torr for recovery of methylene chloride required in the method of and equipment for the disposal of waste matter according to the present invention, is adapted to endure the abovesaid degrees of pressure.

The lid 22 is disposed in the front side of the vessel and structurally integral with the table 26. The table 26 is displaced on the rail 24 provided in the treatment tank T and the lid 22 is movable on the rail 24 below a lid supporting part 23 so as to move integrally with the lid supporting part 23.

A waste synthetic resin film W as an object to be processed, which is kept as it is soiled with earth and has been shreded is mounted on the table 26 which is withdrawn and advanced integrally with the lid 22. Chlorine ion (Cl ⁼ ) or methylene free radical (-CH2-) can easily permeate the whole of waste synthetic resin film W, which has been shreded.

In the state that the table 26 has been thrusted into and retained in the inner space of the treatment tank T, pressure is applied to said inner part after the lid 22 closes the treatment tank T hermetically and unmovably.

Heating/cooling pipes 20 are arranged on the inner bottom of the treatment tank T and, when heating is intended, steam having a temperature amounting to 100 and several tens °C is supplied from a boiler B. For cooling, water in a cooling water tank 18 is supplied. A mixture solution of methylene chloride and water may be poured into the treatment tank T as it is or after changed into mixed gas in a preparatory tank. In the embodiment shown in Fig. 1, the mixture is fed into the treatment tank T while kept liquid.

The mixture solution, while kept as it is, is poured into the treatment tank T to such a level as immersing the heating/cooling pipes 20 and then steam having the temperature amounting to 100 and several tens°C is fed from the boiler B into the heating/cooling pipes 20. Not only methylene chloride having the boiling point of 40°C but also water turn into vapor. The reason why steam and vapor of methylene chloride are fed at the same time lies in the promotion of permeation of vapor of methylene chloride into the inside of the waste synthetic resin film W.

In the present invention, as shown in Figs. 5 and 7, the mixture solution of methylene chloride, water and surfactant reaches no higher level than that below the table 26, so that the waste synthetic resin film W is not immersed in the mixture solution even at the highest level.

The method of the present invention entirely depends on fumigation in which the waste synthetic resin film W is processed with vapor of the mixture solution absorbed thereinto.

Figs. 6 and 7 shows a state of taking out the waste synthetic resin film W after processing. The waste synthetic resin film W mounted on the table 26 is melted and compressed into a solid state on the surface of the table 26. The processed waste synthetic resin film W may be torn off and burned up as fuel in a burner or a furnace as it is or may be decomposed by pyrolysis and distillation and changed into oil for fuel.

The main components of the equipment shown in Fig. 1 are the treatment tank T and a mixture solution tank 14, wherein a mixture solution of methylene chloride, water and surfactant is thrown into the mixture solution tank 14. The boiler B, as previously described, serves for gasifying the mixture solution and a compressor C operates to apply pressure when returning mixture solution in the treatment tank T to the mixture solution tank 14 after completion of processing.

A vacuum pump P operates for absorbing methylene chloride vapor remaining in the inner space of the treatment tank T and the inside of the waste synthetic resin film W after the mixture solution is forcedly discharged by the compressor C. The absorbed methylene chloride vapor, which can not be discharged into the atmosphere, is cooled and liquefied in a condenser 16 and is returned to the mixture solution tank 14 through a condenser pipe 21. A chiller 15 cools cooling water in said condenser 16. A filter 19 is provided for filtering off impurities such as dusts in the mixture solution forced out from the treatment tank T by the compressor C. A cooling water tank 17 is a receptacle for cooling water used for liquefaction of mixture solution vapor

Solenoid valves are arranged at various portions. Such solenoid valves are constructed to be opened and closed by an automatic control device at fixed intervals and automatically operated, as shown in Fig. 2, in steplike order such as "deaeration", "feed of mixture solution", "processing", "cooling of mixture solution", "return of mixture solution to tank", "recovery of mixture solution vapor", and "recovery of mixture solution in condenser". At the same time, the compressor C, boiler B, vacuum pump P, and a chiller 15 are automatically driven and stopped. Collectively, in this embodiment, a mixture ratio by weight between methylene chloride solution and water is set at 4 : 1. A temperature in the treatment tank T is about 80 °C. Once cycle of this process is designed to be completed within 24 hours.

In Fig. 2, a state of the solenoid valve in every step in the method and equipment for the disposal of waste synthetic resin film is shown. In the step of "deaeration", the vacuum pump P is driven. A solenoid valve 1 in the circuit to connect the vacuum pump P to the condenser 16 as well as another valve 3 adapting the condenser 16 to communicate with the treatment tank T is also opened. The other solenoid valves are all closed. In this way, the inner space of the treatment tank T is made vacuum to a degree of about 50 Torr, whereby air in the waste synthetic resin film W is drawn out.

Then, in the step of "feed of mixture solution", a solenoid valve 4 for adapting the treatment tank T to commdunicate with the mixture solution tank 14 is opened whereas the other valves are closed. Thus, the mixture solution moves to the inner part of the treatment tank T so that the level of solution in the mixture solution tank may be flush with that in the treatment tank T since both tanks are arranged at the approximately same levels.

In the step of "processing", the solenoid valve 7 between the boiler B and the treatment tank T and another solenoid valve 9 adapting the treatment tank T to communicate with a drain are opened whereas the other valves are closed. Then, steam of high temperature coming from the boiler B is fed into the heating/cooling pipes 20 and the mixture solution in the treatment tank T changes into methylene chloride vapor, water vapor, surfactant vapor so as to permeate the waste synthetic resin film W. The step of "processing" continues for about 8-24 hours. The time of this process is changed by a temperature for process, a kind of synthetic resin and the like.

The step of "cooling of mixture solution" will be described. In this case, a solenoid valve 8 adapting the cooling water tank 18 to communicate with the treatment tank T and another valve 10 adapting the processing tank T to communicate with the cooling tank 17 are opened whereas the other valves are closed. Thus, cooling water passes through the inner part of the heating/cooling pipes 20 and a temperature in the inner part of the treatment tank T falls below 40°C that is the boiling point of methylene chloride, whereby both methylene chloride vapor and water vapor are returned to liquid.

The step of "return of mixture solution to tank" will be described. In this case, a solenoid valve 2 is opened for escape of air in the treatment tank T and another solenoid valve 5 under the treatment tank T as well as further solenoid valve 6 adapting the compressor C to communicate with the treatment tank T is opened so as to drive the compressor C. On the other hand, a solenoid valve 12 between the filter 19 and the mixture solution tank 14 and another valve 13 adapting the mixture solution tank 14 with the atmosphere are opened. Then, some degree of pressure acts on the inner part of the treatment tank T and liquefied mixture vapor is forcedly returned to the mixture solution tank 14.

The step of "recovery of mixture solution vapor in tank" will be described. In this case, the vacuum pump P is driven. A solenoid valve 1 adapting the vacuum pump P to communicate with the condenser 16 and another valve 3 adapting the condenser 16 to communicate with the treatment tank T are opened. The other valves are closed. In this state, methylene chloride vapor present in the treatment tank T and having permeated into the waste synthetic resin film W is recovered by the vacuum pump P. In this case, the degree of vacuum of the interior of the treatment tank T is lowered to about 200 Torr.

In the step of "recovery of mixture solution in condenser", a solenoid valve 2 communicating with the atmosphere and another solenoid valve 11 adapting the condenser pipe 21 to communicate with the mixture solution tank 14 are opened. Hence, recovery of mixture solution such as methylene chloride remaining in the condenser pipe 21 of the condenser 16 can be recovered into the mixture solution tank 14. A series of such steps as above is completed after a lapse of 24 hours.

Referring to Figs. 5 and 7, a description will be made on the section of the inner part of the treatment tank T in operation of processing. The heating/cooling pipes 20 are disposed on the inner lower part of the treatment tank T and the table 26 is disposed above said heating/cooling pipes 20. The waste synthetic resin film W is mounted on the table 26.

The mixture of water Wa, surfactant solution S, and methylene chloride solution Me is poured into the treatment tank T, so that the level of the mixture solution comes to be higher than the top of the heating/cooling pipes 20, however, lower than such a level as to immerse the waste synthetic resin film W on the table 26 into the solution.

Water Wa and surfactant solution S having specific weight of 1.00 and 1.04, respectively, are on the approximately same levels and the latter S dissolves into the former W to be in one body, thereby composing a layer of "water Wa + surfactant solution S" as shown in Figs. 5 and 7. In contrast with this, methylene chloride solution Me having the specific weight of 1.33 and incapable of dissolving into water Wa forms a layer beneath the layer of "water Wa + surfactant solution S".

When the steam heated to 160°C is fed into the heating/cooling pipes 20 disposed in the "water Wa + surfactant S" layer, the temperature of the portion around the heating/cooling pipes 20 rises. The heating/cooling pipes 20 are arranged in the layer of "water Wa + surfactant solution S", so that the temperature of the layer potion near the heating/cooling pipes 20 rises earlier than that of the other portions thereof.

When the temperature of the heating/cooling pipes 20 gradually rises and reaches about 40 °C, methylene chloride solution Me is heated to reach the boiling point thereof, turns into methylene chloride vapor divided into bubbles, passes through the layer of "water Wa + surfactant solution S", and reaches the waste synthetic resin film W so as to permeate the film W.

In the processing of a usual waste synthetic resin film W, the processing operation continues in a state that the mixture solution is heated to about 50°C and methylene chloride vapor passes through the mixture solution of water and surfactant solution S and reaches the waste synthetic resin film W.

In the case of such a waste synthetic resin film W hard to be processed, the mixture solution is heated to about 100°C, so that water Wa and surfactant solution S are turned into vapor additionally to methylene chloride.

The waste synthetic resin film W is oxidized and melted by a chlorine ion (Cl ⁻ ) and a methylene free radical (-CH₂-) generated from methylene chloride vapor and water vapor of the present invention.

A temperature for heating a mixture solution ranges from 50 to 150°C, so that chlorine ion (Cl ⁻ ) and methylene free radical (-CH₂-) can be generated at a low temperature and a processing temperature is lowered. The waste synthetic resin film W can be processed without calcination at a high temperature.

A mixture ratio by weight between methylene chloride solution and water is set at about 1 : 1 to 4 : 1, thus, the best state of chlorine ion (Cl ⁻ ) and methylene free radical (-CH₂-) is generated.

Additionally, methylene chloride vapor permeates the waste synthetic resin film W while attended with surfactant solution S. Hence, decomposition and removal of synthetic resin is sharpened.

Surfactant solution S mixed with methylene chloride vapor passing through organic holes of the waste synthetic resin film W sharpens decomposition of synthetic resin.

Furthermore, before permeation of methylene chloride vapor, water vapor and surfactant permeate, the waste synthetic resin film W is deaerated in the interior of the treatment tank T made vacuum so that methylene chloride vapor can permeate the waste synthetic resin film W in the state that the air within the waste synthetic resin film W is extracted therefrom. Accordingly, methylene chloride vapor can permeate more deeply than ever.

Thus, the methylene chloride vapor easily permeates the waste synthetic resin film and oxidizes it.

Production of a large quantity of methylene chloride vapor at a low temperature does not require a high temperature for the disposal of the interior of the treatment tank T.

By the way, while said methylene chloride Me passes through water Wa and surfactant solution S, Cl₂ "chlorine gas" generated from methylene chloride is absorbed into water Wa and controlled not to be generated further for preventing unfavorable influence thereof falling on processing.

If a mixture ratio by weight between methylene chloride solution , water and surfactant is set at 5 : 4.5 : 0.5, the highest effect of removing chlorine can be obtained.

In this way, because of a processing of heating the mixture solution of water Wa, surfactant S, and methylene chloride Me by the heating/cooling pipes 20, the vapor of methylene chloride Me evaporates into the interior of the treatment tank T after passing through water Wa and surfactant solution S, thereby Cl₂ being reduced.

The oxidized and dissolved waste synthetic resin film W remains as it is on the table 26 or is thrown down therefrom. The dissolved waste synthetic resin film W has been changed into a solid state and its contents is one-tens as large as its first, when the mounting table 26 is taken out. This solid is thrown in a furnace or a burner as a solid fuel.

The waste synthetic resin film W which is dissolved and compressed with the present invention is taken out separately and dissolved by heat and a component part of oil is taken out easily by a fining separator therefrom. This is burned up as the same fuel of kerosene and can be offered as raw material for a garbage furnace or the production of electric power by incineration or heating by incineration.

By the method for the disposal of waste synthetic resin film of the present invention, a chloric synthetic resin film such as polyvinyl chlorine is processed, thereupon, chlorine is reduced to one-tens. Therefore, generation of chlorine gas is little, also, is not cause of a pollution when solid or liquid after processing is burned up.

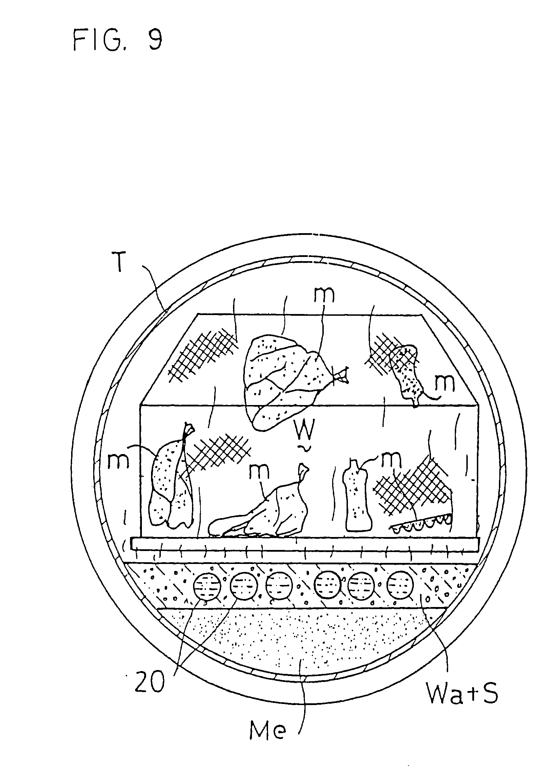

Next, other embodiments of methods for disposal of other materials will be explained in accordance with Figs. 9 to 11.

Fig. 9 shows a state wherein waste W mixed synthetic resin materials m is mounted on the table 26 and processed.

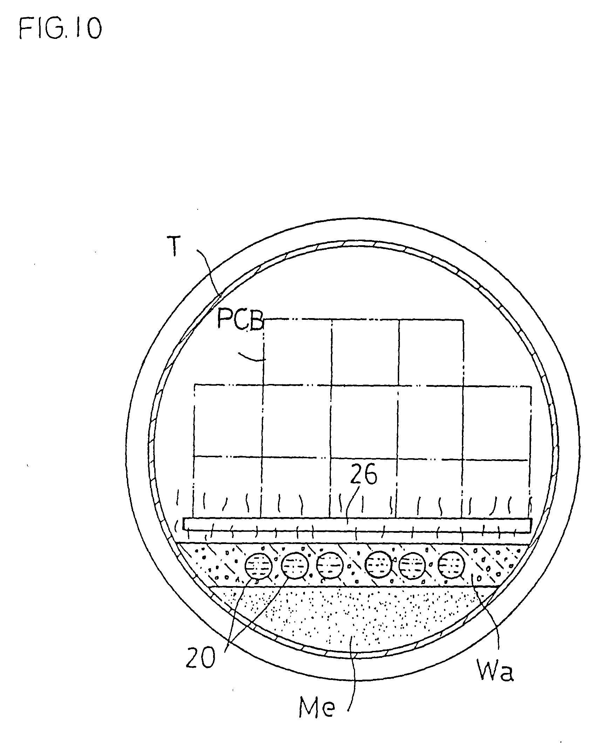

Fig. 10 shows a state wherein a vessel holding PCB solution is mounted on the table 26 and processed.

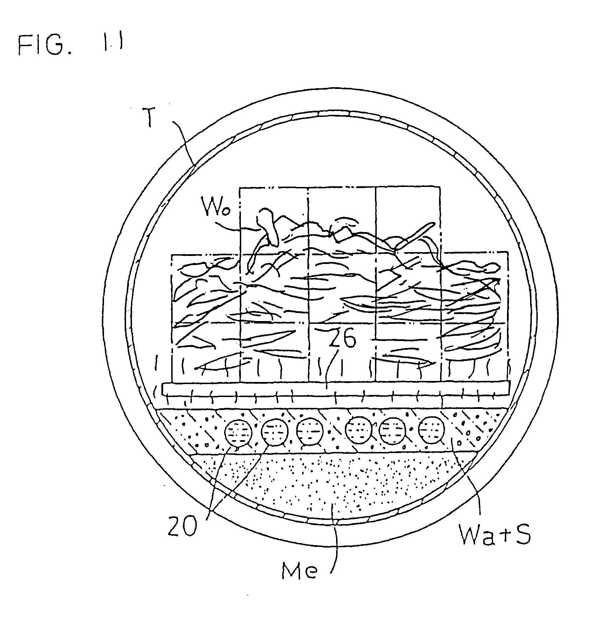

Fig. 11 shows a state wherein fish, bones of animals or so on are mounted on the table 26 and processed.

They are exactly alike in a respect that vapor of methylene chloride solvent solution Me and water Wa fumigates and processes, although substances on the tables 26 are different from each other.

In the method for disposal of waste W mixed synthetic resin materials m shown in Fig. 9, methylene chloride vapor and water vapor permeates the waste W mixed synthetic resin so as to dissolve synthetic resin and a state that synthetic resin in the waste W is easily dissolved to the outside can be obtained, so that only synthetic resin in a garbage such as a trash bag, a polyethylene terephthalate bottle, a mat for wrapping a daily dish, plastic wrap, a plastic vessel or so on can be separated out with no hand in the steps of the present disposal before incineration of garbage.

Adding surfactant to methylene chloride solution promotes vaporization of methylene chloride solution explosively and a strong oxidization can be obtained at a low temperature. Also, Surfactant promotes pouring of resolved and decomposed synthetic resin from a garbage, so that the time for the disposal thereof in the treatment tank T can be shortened.

Also, mixing surfactant with water and methylene chloride solution enables promotion of vaporization of methylene chloride solution and water at a low temperature. Water usually vaporizes at the temperature of 100°C, however, can vaporize at a lower temperature as a result of addition of surfactant thereto, and, therefore, sufficient pressure can be obtained at a temperature ranging from 50 to 150 °C, so as not to require a high temperature over 150°C for obtaining a high pressure.

Chlorine ion (Cl ⁻ ) and methylene free radical (-CH₂-) is generated easily and the time until extinction by chemical combination is extended as a result of generating methylene chloride vapor and water vapor at a vacuum or a low pressure in the treatment tank which has been deaerated before processing by a vacuum pump, whereby, a strong oxidization can be maintained.

A temperature for heating a mixture solution ranging from 50 to 150 °C enables genaration of chlorine ion (Cl ⁻ ) and methylene free radical (-CH₂-) at a low temperature and restrain of damage of waste W mixed synthetic resin.

Further, methylene chloride vapor and water vapor permeate a garbage or vegetation so as to dissolve organic cells of them so as to provide a state that an essence of vegetation and fat components are dissolved outside easily. Whereby, an essence of vegetation is easily extracted, and in a case of processing garbage, water and fat is separated from fiber easily, so that the time of processing for fermentation can be shorter than that of convention.

Furthermore, since a mixture of water Wa, surfactant solution S and methylene chloride solution Me is prepared and gas of methylene chloride Me is fed to waste W such as a garbage or vegetation after passing through the layers of both water Wa and surfactant solution S, Cl₂ as a constituent of HCL is absorbed into water and inflicts no damage to a garbage or vegetation W, because of reduction of the rate of generation thereof. Methylene chloride gas can be easily absorbed and recovered by reducing pressure in the treatment tank T to be negative or vacuum in the end after competition of processing, the structure of a garbage or vegetation of waste W is not damaged after recovery of methylene chloride.

Recovery of methylene chloride gas is performed promptly and completely and can be re-used with the progress of cooling and liquefaction. In this way, consumption of methylene chloride solution Me and cost of processing can be reduced.

A temperature for heating a mixture solution ranging from 50 to 150 °C enables easy extraction of a natural essence of vegetation without a chemical change of the essence, so that this essence is safe for be used as a health food. Also, the necessary amount of heat can be reduced.

A method of decomposing PCB shown in Fig. 10 according to that of the present invention as above exhibits the following effects.

Conventionally, PCB is barely decomposed by exposing to ultraviolet rays or processing by heat at a high temperature higher than 1200 °C, however, in the present invention, a mixture solution of methylene chloride solution capable of re-use by recovery and water is heated at a temperature lower than 100 °C near a room temperature, so as to generate a strong oxidization of chlorine ion (Cl ⁻ ) by which chains of PCB can be decomposed, whereby, processing for decomposing PCB of no value added can be performed at a low cost.

A method of removal of oil or fat components from fish or bones of animals shown in Fig. 11 according to that of the present invention as above exhibits the following effects.

Action for removal of oil or fat components from fish or bones of animals is performed by using methylene chloride solution and water, then, methylene chloride is liquefied by cooling and is separated from water and fat components, therefore, the cost of methylene chloride can be reduced and methylene chloride does not pollute oil or fat and drainage.

Also, methylene chloride solution, which can be recovered easily after processes can be used again as solvent solution, therefore, the cost of processing can be reduced.

Because the processing temperature is low from 50 to 150°C, fish and bones of animals of waste W is not calcinated, therefore, the value as powdered bone or fish meal is not fallen. Also, the cost of energy for the disposal thereof can be reduced by processing at a low temperature and not so high pressure.

In a short time about 20 hours, animal bones or fish of wast W are processed largely every a batch, whereby, animal bones or fish, which is conventionally incinerated in spite of removal of oil or fat components, can be easily processed at a low cost. Reduction of waste and effective use of animal bones or fish W as a resource, which has been incinerated conventionally, can be obtained.

Conventionally, pig bone, cow bone or so on are ground into powder without complete removal of oil or fat components, therefore, the powder is perishable and generates a stench because of oil or fat on. By processing for removal of fat as the present invention, high-purity powdered bones can be made and provided as high-grade phosphtic manure.

Also, conventionally, fish is dried for fish meal without removal of oil or fat components, so that a smell of fish remains Thus, there is a problem that the meat of a cow or a pig, which eats the fish meal, also smells of fish. In the present invention, a smell of fish of fish meal is restained by removal of oil or fat components from fish, whereby, the fish meal can be sold as high-grade fish meal.

Further, animal oil or fat and fish oil are extracted largely from animal bones or fish so as to extract effective materials for a human body from the animal oil or fat and fish oil or extract oil or fat such as docosahexaenoic acid, hexapentaenoic acid or so on, which enables of using as a medicine. Accordingly, animal oil or fat and fish oil, which have been disused, can be used effectively.

Furthermore, conventionally, animal bones or fish W is ground into powder as it is, after that, boiled and filtered for extracting animal oil or fat or fish oil, however, by the present invention, only oil or fat components can be extracted from animal bones or fish is extracted with remaining as their shape are. Thus, animal oil or fat or fish oil can be extracted by easy operation.

### Industrial Applicability

In accordance with the present invention, water and methylene chloride solution as halogenated solvent solution or chlorine solvent solution are mixed and disposed in a treatment tank so as to generate vapor and methylene chloride solvent vapor, water vapor, and occasionally surfactant solvent vapor permeate a waste synthetic resin film W, then, chlorine ion (Cl ⁻ ) and methylene free radical (-CH₂-) generated from the vapors in a vacuum interior of the treatment tank operate oxidative action strongly for a longer time than usual, so as to dissolve or decompose synthetic resin by dividing a long chain of molecule of hydrocarbon radical, which synthetic resin, and changing it into a carbohydrate, alcohol and water. Whereby, harmful components of PCB, oil or fat components of animal bones or fish, and the like are dissolved or decomposed.

In the method for the disposal of waste synthetic resin film according to the present invention, surfactant solvent solution is mixed into methylene chloride solution and water, so that said surfactant solvent vapor make easy outflow and separation of synthetic resin after dissolved. Vapors can be generated at a low temperature by mixing surfactant solvent solution into methylene chloride solution and water so as to lower a processing temperature, whereby, the waste synthetic resin film W is not calcinated.

Methylene chloride vapor, water vapor, and occasionally surfactant solvent vapor of the present invention permeate the waste polyvinyl chloride W, then, chlorine ion (Cl ⁻ ) and methylene free radical (-CH₂-) generated from the vapors in a vacuum interior of the treatment tank operate oxidative action strongly for a longer time than usual, so as to dissolve or decompose synthetic resin by dividing a long chain of molecule of hydrocarbon radical, which synthetic resin, and changing it into a carbohydrate, alcohol and water.

In the method for the disposal of waste polyvinyl chloride according to the present invention, surfactant solvent solution is mixed into methylene chloride solution and water, so that said surfactant solvent vapor make easy separation and melting of chlorine after dissolved. Vapors can be generated at a low temperature by mixing surfactant solvent solution into methylene chloride solution and water so as to lower a processing temperature, whereby, the waste polyvinyl chloride W is not calcinated.

The waste polyvinyl chloride W is oxidized and dissolved by chlorine ion (Cl ⁻ ) and methylene free radical (-CH₂-) generated from methylene chloride vapor and water, after that, fallen down from the table 26. The dissolved waste polyvinyl chloride W has been changed into a solid state when the table 26 is taken out from the treatment tank. Its contents is one-several tenth as large as its first contents by dissolving and compressing. The solid is thrown into a furnace or a burner as solid fuel.

The waste polyvinyl chloride W dissolved and compressed according to the present invention is extracted separately and decomposed by heat, after that, only petroleum component is extracted, thus, used as the same fuel of kerosene and can be provided as raw material for a garbage furnace or the production of electric power by incineration or heating by incineration.

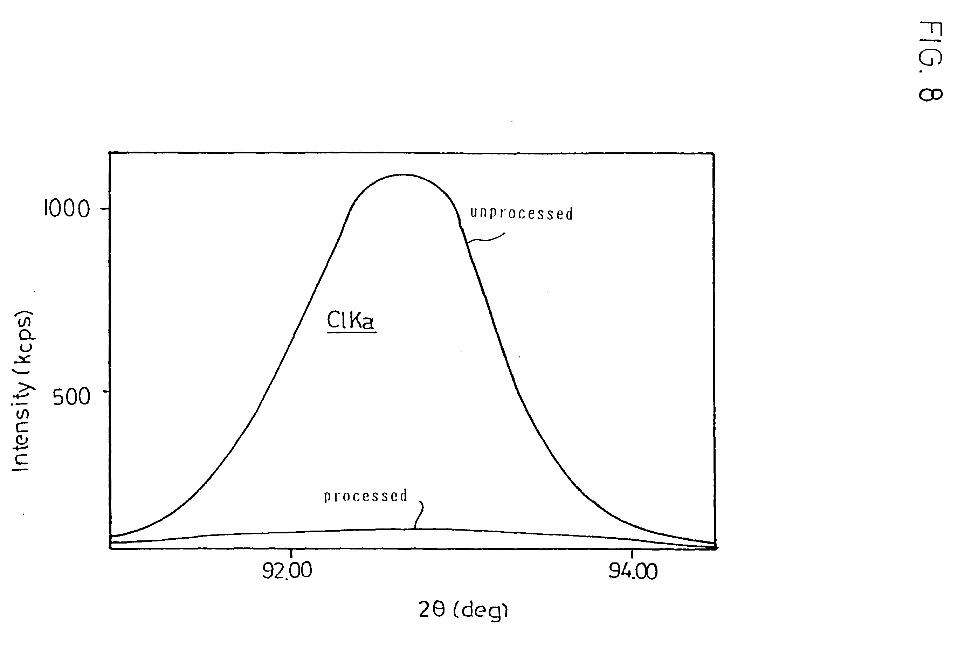

Also, according to qualitative analysis findings of all chemical elements shown in Fig. 8, chlorine is reduced to one-tenth as much as its first when chloric synthetic resin film such as polyvinyl chlorine is processed by the method of and the apparatus for the disposal of waste polyvinyl chlorine of the present invention. It is conceivable that chlorine composing a component of waste polyvinyl chlorine is vaporized and resolved by a chlorine ion (Cl ⁻ ) and methylene free radical (-CH₂-), after that, acted upon water so as to change into hydrochloric acid or so on and be recovered into the mixture solution.

Therefore, generation of chlorine gas is a little when a processed solid or liquid is burned up.

Methylene chloride vapor, water vapor, and occasionally surfactant vapor of the present invention permeate garbage mixed synthetic resin and a chlorine ion (Cl ⁻ ) and methylene free radical (-CH₂-) generated from the vapors in a vacuum interior of the treatment tank operate oxidative action strongly for a longer time than usual, so as to dissolve or decompose synthetic resin by dividing a long chain of molecule of hydrocarbon radical, which synthetic resin, and changing it into a carbohydrate, alcohol and water, with remaining garbage.

Only a part of synthetic resin m is oxidized and dissolved by a chlorine ion (Cl ⁻ ) and methylene free radical (-CH₂-) generated from methylene chloride vapor and water vapor of the present invention and fallen from the table 26. The dissolved synthetic resin m does not combine with methylene chloride solution, water and surfactant solvent solution chemically so that they are in lays, after that, synthetic resin m can be easily separated and extracted.

Also, a chlorine ion permeates a certain extent of PCB because permeation of a chlorine ion (Cl ⁻ ) is strong. By agitation of PCB solution, large PCB solution is oxidized and chains of PCB are changed into cloudy matter in alcohol state. Whereby, PCB can be changed into unharmful material to human body.

## Claims

1. Method for the disposal of materials **characterized in that** a mixture solution of halogenated solvent solution, whose specific gravity is not less than 1 and boiling point is not more than 100 °C, with water is disposed in an airtight treatment tank, said mixture solution separates into an upper water layer and a lower halogenated solvent solution layer, materials are disposed above said upper water layer without soaking in said mixture solution, said mixture solution is heated, generated halogenated solvent vapor reaches said materials after passing through said water layer, and said treatment tank is filled with said halogenated solvent vapor and water vapor so as to treat said materials by said vapors.

2. Method according to claim 1, wherein said mixture solution is a mixture solution of a chloric solvent solution with water.

3. Method according to claim 2, wherein said mixture solution is a mixture solution of methylene chloride solution with water.

4. Method according to claim 3, wherein said material to be disposed is a waste synthetic resin film.

5. Method according to claim 4, wherein said waste synthetic resin film is a polyvinyl chloride film.

6. Method according to claim 3, wherein said material to be disposed is a waste containing synthetic resin.

7. Method according to claim 3, wherein said material to be disposed is garbage or vegetation.

8. Method according to anyone of claims 2 and 3, wherein said material to be disposed is a waste material comprising PCB.

9. Method according to anyone of claims 2 and 3, wherein said material to be disposed are animal bones or fish.

10. Method according to claim 8 as far as it refers to claim 3, wherein said mixture solution further comprises a surfactant.

11. Method according to anyone of claims 1 to 6, comprising an additional step of applying a vacuum to the interior of the treatment tank, and thereafter starting said disposal at a low pressure.

12. Method according to anyone of claims 4 to 6, wherein the weight ratio of methylene chloride solution to water is set between 1:1 and 4:1.

13. Method according to anyone of claims 1 to 10, to claim 11 as far as it refers to claim 10, and to claim 12 as far as it refers to claim 6, wherein the temperature for heating said mixture solution is set at 50 to 150 °C.

14. Method according to anyone of claims 12 or 13 as far as each of said claims refers to claim 3, 5, 6 or 9, comprising an additional step of applying a vacuum to the interior of the treatment tank, and thereafter starting said disposal at a low pressure.

15. Method according to claim 5, wherein chloric content is removed from said polyvinyl chloride film.

## Patentansprüche

1. Verfahren zur Entsorgungsbehandlung von Materialien, **dadurch gekennzeichnet, dass** eine Mischlösung aus der Lösung eines halogenierten Lösungsmittels eines spezifischen Gewichts von nicht weniger als 1 und eines Kochpunkts von nicht mehr als 100 °C mit Wasser in einen luftdichten Behandlungstank gefüllt wird, die Mischlösung sich in eine obere Wasserschicht und eine untere Schicht aus der Lösung eines halogenierten Lösungsmittels auftrennt, wobei sich Materialien oberhalb der oberen Wasserschicht anordnen, ohne in die Mischlösung einzutauchen, die Mischlösung erwärmt wird, der erzeugte Dampf des halogenierten Lösungsmittels nach der Passage durch die Wasserschicht die Materialien erreicht, und der Behandlungstank mit dem Dampf des halogenierten Lösungsmittels und Wasserdampf gefüllt wird, um die Materialien durch diese Dämpfe zu behandeln.

2. Verfahren nach Anspruch 1, wobei die Mischlösung aus einer Mischlösung einer Chlorlösungsmittellösung mit Wasser besteht.

3. Verfahren nach Anspruch 2, wobei die Mischlösung aus einer Mischlösung einer Methylenchloridlösung mit Wasser besteht.

4. Verfahren nach Anspruch 3, wobei das zu behandelnde Matrial aus einer Abfallkunstharzfolie besteht.

5. Verfahren nach Anspruch 4, wobei die Abfallunstharzfolie aus einer Polyvinylchloridfolie besteht.

6. Verfahren nach Anspruch 3, wobei das zu behandelnde Material aus einem ein Kunstharz enthaltenden Abfall besteht.

7. Verfahren nach Anspruch 3, wobei das zu behandelnde Material aus Müll oder Vegetation besteht.

8. Verfahren nach einem der Ansprüche 2 und 3, wobei das zu behandelnde Material aus einem PCB umfassenden Abfallmaterial besteht.

9. Verfahren nach einem der Ansprüche 2 und 3, wobei das zu behandelnde Material aus Tierknochen oder Fisch besteht.

10. Verfahren nach Anspruch 8, sofern sich dieser auf Anspruch 3 bezieht, wobei die Mischlösung zusätzlich ein grenzflächenaktives Mittel enthält.

11. Verfahren nach einem der Ansprüche 1 bis 6, umfassend eine zusätzliche Stufe, in der das Innere des Behandlungstanks unter Vakuum gesetzt wird und die Behandlung bei niedrigem Druck begonnen wird.

12. Verfahren nach einem der Ansprüche 4 bis 6, wobei das Gewichtsverhältnis Methylenchloridlösung/Wasser auf 1:1 bis 4:1 eingestellt wird.

13. Verfahren nach einem der Ansprüche 1 bis 10 oder nach Anspruch 11, sofern er sich auf Anspruch 10 bezieht, oder nach Anspruch 12, sofern er sich auf Anspruch 6 bezieht, wobei die Temperatur zum Erwärmen der Mischlösung auf 50 bis 150 °C eingestellt wird.

14. Verfahren nach einem der Ansprüche 12 oder 13, sofern sie sich jeweils auf Anspruch 3, 5, 6 oder 9 beziehen, umfassend eine weitere Stufe, in der das Innere des Behandlungstanks unter Vakuum gesetzt wird und anschließend die Behandlung bei niedrigem Druck begonnen wird.

15. Verfahren nach Anspruch 5, wobei der Chlorgehalt aus der Polyvinylchloridfolie entfernt wird.

## Revendications

1. Procédé de traitement de matières, **caractérisé en ce qu'**on dispose une solution d'un mélange d'une solution dé solvant halogéné, dont le poids volumique n'est pas inférieur à 1 et dont le point d'ébullition n'est pas supérieur à 100°C, et d'eau dans un réservoir de traitement étanche à l'air, on sépare ladite solution d'un mélange en une couche supérieure d'eau et une couche inférieure de solution de solvant halogéné, on dispose les matières au-dessus de ladite couche supérieure d'eau sans tremper dans ladite solution de mélange, on chauffe ladite solution de mélange, la vapeur de solvant halogéné générée atteignant lesdites matières après être passée à travers ladite couche d'eau, et on remplit ledit réservoir de traitement avec ladite vapeur de solvant halogéné et ladite vapeur d'eau de manière à traiter lesdites matières par lesdites vapeurs.

2. Procédé selon la revendication 1, **caractérisé en ce que** ladite solution de mélange est une solution de mélange d'une solution de solvant chloré avec de l'eau.

3. Procédé selon la revendication 2, **caractérisé en ce que** ladite solution de mélange est une solution de mélange d'une solution de chlorure de méthylène avec de l'eau.

4. Procédé selon la revendication 3, **caractérisé en ce que** ladite matière devant être traitée est un déchet de film de résine synthétique.

5. Procédé selon la revendication 4, **caractérisé en ce que** ledit déchet de film de résine synthétique est un film de poly(chlorure de vinyle).

6. Procédé selon la revendication 3, **caractérisé en ce que** ladite matière devant être traitée est un déchet contenant une résine synthétique.

7. Procédé selon la revendication 3, **caractérisé en ce que** ladite matière devant être traitée est constituée d'ordures ou de végétaux.

8. Procédé selon l'une quelconque des revendications 2 et 3, **caractérisé en ce que** ladite matière à traiter est une matière de déchet comprenant du poly(biphényl chloré) (PCB).

9. Procédé selon l'une quelconque des revendications 2 et 3, **caractérisé en ce que** ladite matière à traiter est constituée par des os d'animaux ou des poissons.

10. Procédé selon la revendication 8 pour autant qu'elle se réfère à la revendication 3, **caractérisé en ce que** ladite solution de mélange comprend en outre un tensioactif.

11. Procédé selon l'une quelconque des revendications 1 à 6, comprenant une étape supplémentaire consistant à appliquer un vide à l'intérieur du réservoir de traitement, et ensuite à démarrer ledit traitement à basse pression.

12. Procédé selon l'une quelconque des revendications 4 à 6, **caractérisé en ce que** le rapport en poids du chlorure de méthylène à l'eau est établi entre 1 : 1 et 4 : 1.

13. Procédé selon l'une quelconque des revendications 1 à 10, selon la revendication 11 pour autant qu'elle se réfère à la revendication 10, et selon la revendication 12 pour autant qu'elle se réfère à la revendication 6, **caractérisé en ce que** la température de chauffage de ladite solution de mélange est établie à 50°C à 150°C.

14. Procédé selon l'une quelconque des revendications 12 ou 13 pour autant que chacune desdites revendications se réfère à la revendication 3, 5, 6 ou 9, comprenant une étape supplémentaire consistant à appliquer un vide à l'intérieur du réservoir de traitement, et ensuite à démarrer ledit traitement à basse pression.

15. Procédé selon la revendication 5, **caractérisé en ce que** la teneur en chlore est éliminée dudit film de poly(chlorure de vinyle).
